# EUROPEAN PATENT APPLICATION

(11) **EP 4 415 089 A1**
(43) Date of publication of application: **14.08.2024**
(21) Application number: 23155977.4
(22) Date of filing: 10.02.2023
(51) Int. Cl.: H01M 10/04, H01M 10/058, H01M 10/613, H01M 10/625, H01M 10/647, H01M 10/6555, H01M 50/209, H01M 50/238, H01M 50/242, H01M 50/249

(54) **BATTERY SUB-ASSEMBLY WITH A SWELLING COMPENSATOR**

(71) Applicant: Newfrey LLC, New Britain, CT 06053 (US)
(72) Inventor: AKBARINIA, Alireza, 35394 Gießen (DE); HOFMANN, Lukas, 35394 Gießen (DE)
(74) Representative: SBD IPAdmin

(57) **Abstract**

Battery module (10) and battery module sub-assembly (12) comprising at least a first and second battery cell (14, 16), first contact layer adapted to contact the first battery cell, a first barrier layer adjacent to the first contact layer, a second contact layer adapted to contact the second battery cell, a second barrier layer adjacent to the second contact layer, and a spring carrier (30) arranged between the first and the second barrier layer, the spring carrier forming a swelling compensator.

## Description

The present invention relates to a battery sub-assembly and a battery module. The field of the invention is for instance that of batteries for hybrid or electric vehicles in which the energy is stored in a storage rechargeable battery. More particularly the invention relates to compensation systems for the swelling of electrochemical cells constituting a battery.

As the technology for electric vehicle continues to evolve, there is a need to provide improved power sources, particularly battery subassemblies, for such vehicles. For example, it is desirable to minimize the complexity and the weight of battery subassemblies, to decrease the costs associated with manufacturing, to better manage thermal propagation within such battery subassemblies and to improve their performance. A rechargeable or secondary battery differs from a primary battery in that it can be repeatedly charged and discharged, while the latter provides only an irreversible conversion of chemical to electrical energy. High-capacity rechargeable batteries are used as the power supply for hybrid and electric vehicles and the like.

In the present context, the terms "battery cell", "battery module", "battery section," and "battery pack" (as well as their shortened variants "cell", "module", "section", and "pack") are used to describe different levels of components of an overall battery assembly or battery apparatus. Conventionally a battery cell (for example a Li-ion battery cell) comprises a housing system and a battery cell material encapsulated within the housing system. The battery cell material includes one or more cathodes, one or more anodes, an electrolyte and a separator composed from a porous polymer or other suitable material to avoid direct contact between the electrodes. Numerous individual battery cells form the building blocks of battery modules. Multiple battery modules in turn make up a battery pack. Building units of battery module, battery module or battery pack may each be defined as a battery sub-assembly.

Each battery module mounted in a middle or large-sized battery pack is generally manufactured by stacking a plurality of battery cells with high integration in a housing. In this case, the battery cells are stacked in a state in which the battery cells are arranged at predetermined intervals such that heat generated during charge and discharge of the battery cells can be removed. For example, the battery cells may be sequentially stacked in a state in which the battery cells are arranged at predetermined intervals with a gap between each battery cell.

In general, rechargeable batteries include an electrode assembly including a positive electrode, a negative electrode, and a separator interposed between the positive and negative electrodes, a casing receiving the electrode assembly, and electrode terminals electrically connected to the positive and negative electrodes of the electrode assembly, respectively. An electrolyte solution is injected into the casing in order to enable charging and discharging of the battery via an electrochemical reaction of the positive electrode, the negative electrode, and the electrolyte solution.

There exist battery cells in various sizes and shapes, such as cylinder cells, for example, or flat cells, such as prismatic cells or so-called pouch cells (coffee bag cells). Pouch cells have a flexible housing, which, as a rule, is composed of aluminium foil that is coated with plastic on both sides. Flat cells, such as pouch cells or prismatic cells, are preferred in regard to a better heat dissipation and stackability.

During charging of a battery cell, for example of a battery cell of lithium-ion type, swelling of the casing of the battery cell occurs. In the case of a cell of prismatic format (also called prismatic cell), swelling occurs essentially on the two lateral planar opposite faces the biggest ones of the casing. This swelling is amplified while the state of charge of the battery cell moves closer to the completely charged state. As the cells are joined behind each other in the housing and each cell experiences an increase in its thickness, a notable increase in the total length of the battery is seen, resulting from the sum of the increases in thicknesses of the cells. Because the housing is generally constituted by a rigid material and the gap between the cells and the walls of the housing is limited, swelling of the cells subjects the walls of the housing to pressure forces which may lead to its irreversible deformation, or a premature aging of the cells, or even to the battery being damaged. As a consequence, a device which prevents the housing from deforming under the effect of the swelling of the cells during their charge is preferred.

To rectify this problem it is known to insert a spring or a deformable piece between two faces of two cells. However the current solutions do not allow to control the compression force generated between two cell and a risk of damage exist.

Document EP3208866A1 discloses a battery with two prismatic cells separated by a flexible wedge and a rigid wedge. The wedges are in plastic material. The function of the rigid wedge is to keep the distance between two adjacent cells constant, playing the role of a spacer. The function of the flexible wedge is to absorb the increase in thickness of the cell with which it is associated during charging of the cell. However, the plastic material does not allow to have a precise and reliable compression resistance.

Document EP3963645A1 also discloses a pressure module in particular for Lithium-Ion battery cells. The pressure module comprises an outer covering, which surrounds a cavity that has a channel structure. The channel structure conveys a heat transfer medium. This arrangement provides a good thermal management but is cumbersome and complex with the channel structure to convey the heat transfer medium.

An object of the present disclosure is to provide an improvement over the above-described systems. It is therefore an object of the present invention to provide a compact and reliable system which prevents variation in dimensions of a battery sub-assembly and fulfil a thermal management function.

Accordingly, the present invention provides a battery sub-assembly comprising:
- at least a first and a second battery cell, in particular battery cell of prismatic format;
- a first contact layer adapted to contact the first battery cell;
- a first barrier layer adjacent to the first contact layer, wherein the thermal conductivity of the first contact layer is greater than the thermal conductivity of the first barrier layer;
- a second contact layer adapted to contact the second battery cell;
- a second barrier layer adjacent to the second contact layer, wherein the thermal conductivity of the second contact layer is greater than the thermal conductivity of the second barrier layer, and
- a spring carrier arranged between the first and the second barrier layer, the spring carrier forming a swelling compensator.

The present battery sub-assembly with the spring carrier and the thermal fins formed by a contact layer and a battery layer ensure the application of a defined force that counteracts the expansion of the prismatic cells, convey the heat of the battery cell without propagation to the adjacent cells and thus minimizes power losses due to the battery charging cycles.

In an embodiment, the spring carrier comprises a guide and a spring plate, wherein the spring plate is connected to and guided by the guide. The spring carrier is easy to manufacture and mechanically robust and reliable.

In an embodiment, wherein the guide is a first guide, the spring plate is a first spring plate, and the spring carrier further comprises a second guide and a second spring plate, the second spring plate being connected to the second guide. The resistance to an external compression force is increased.

In an embodiment, a supporting plate extends between the first and the second guide. The compression plate increases the robustness and limit the risks of damages.

In an embodiment, a first holding plate is arranged between the first barrier layer and the spring carrier such that the spring carrier contacts the first holding plate. It reduces the risks of court circuit. It also limits the risk of damages.

In an embodiment, a second holding plate is arranged between the second barrier layer and the spring carrier such that the spring carrier contacts the second holding plate. It reduces the risks of court circuit. It also limits the risk of damages.

In an embodiment, the first and/or second contact layer is made of copper. The thermal conductivity of this material is good enough for transferring heat from the cells to the outside.

In an embodiment, the first and/or second barrier layer is made of paper. The paper has a low thermal conductivity and is light in weight.

In an embodiment, a plurality of spring carriers is arranged along the first and second barrier layers between the first and second battery cells. The stiffness of the system may be adjusted with the number of spring carriers used. Therefore, depending on the needed stiffness, the materials and performance, the number of spring carriers between the first and second battery cells decreases or increases.

In an embodiment, the spring carrier has a thickness between 2 and 6 mm in a rest position and a thickness between 1 mm and 3 mm mm when under constraint with a compression force which could be between 5Kilonewtons and 50 Kilonewtons or a pressure of 0.1 MPa to 10M Pa.

In an embodiment, the spring carrier is in metal. Thus the rigidity remains over a plurality of charging cycles. The present arrangement allows a replicability of the compression forces.

The present invention is also directed to a battery module comprising a plurality of battery sub-assemblies and being such that between two battery cells at least one spring carrier is arranged. In an embodiment, a cooler may be provided, the cooler being in direct or indirect contact with the contact layers.

The present disclosure will by way of example be described in more detail with reference to the appended schematic drawings, which show examples of the present disclosure.
Fig. 1 shows schematically a battery module with a plurality of battery sub-assemblies according to the invention, wherein the battery sub-assemblies each comprises a spring carrier arranged between two battery cells;
Fig. 2 shows schematically the spring carrier of Fig. 1 between two battery cells and its components;
Fig. 3 shows schematically in a front view and in a sectional view the positioning of spring carriers in a possible embodiment of a battery sub-assembly;
Fig. 4 shows schematically in a front view and in a sectional view the positioning of carrier spring in another possible embodiment of a battery sub-assembly;
Fig. 5 is a diagram showing the replicability of the force-displacement curve when a compression force is applied to the spring carrier of the battery sub-assembly according to the invention;
Fig. 6 shows a second embodiment of a spring carrier of a battery sub-assembly according to the invention.

On the different figures, the same reference signs designate identical or similar elements.

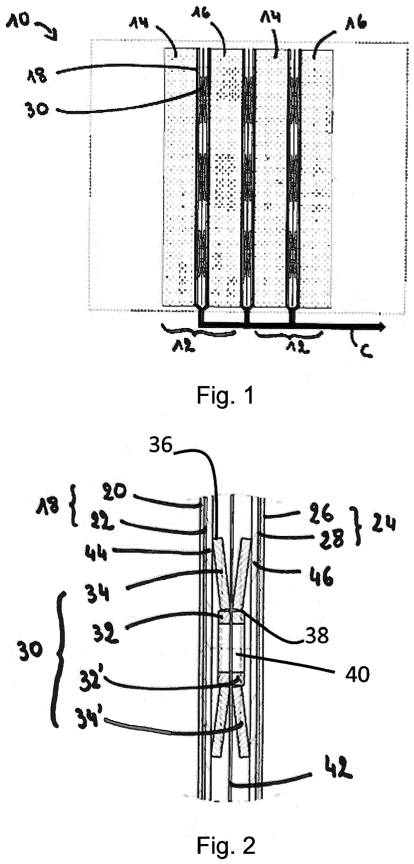

A battery module 10 as visible in Fig. 1 comprises a plurality of battery sub-assemblies 12. The invention will be described below in reference to electrochemical cells of prismatic shape, but the skilled person could possibly apply it to cells of cylindrical format.

Each battery sub-assembly 12 comprises a first and a second battery cell 14, 16 of prismatic format (also called prismatic cell). A first thermal fin 18 extends in facing contact with the first battery cell 14. More particularly, the first thermal fin 18 comprises a first contact layer 20 adapted to contact the first battery cell 14 and a first barrier layer 22 in facing contact with the first contact layer 20. The thermal conductivity of the first barrier layer 22 is smaller than the thermal conductivity of the first contact layer 20. For instance, the first barrier layer 22 is made of paper, wherein the first contact layer 20 is made of copper or aluminium or graphite or metal material. A second thermal fin 24 extends in facing contact with the second battery cell 16. The second thermal fin 24 comprises a second contact layer 26 in facing contact with the second battery cell 16 and a second barrier layer 28 adjacent the second contact layer 26. The thermal conductivity of the second barrier layer 28 is smaller than the thermal conductivity of the second contact layer 26. For instance, the second barrier layer 28 is made of paper, wherein the second contact layer 26 is made of copper or aluminium or graphite or metal material. In other embodiments, other material may be used. More particularly, the first and/or second contact layer 20, 26 is made with a material having a high thermal conductivity. For instance, a high thermal conductivity material is a material having a thermal conductivity in the range of 100 to 3000 W·m-1·K-1. Graphite or copper are materials having a high thermal conductivity. The first and/or second barrier layer 22, 28 is made in a material having a low conductivity. For example, with a material having a thermal conductivity below 100 W·m-1·K-1. The contact layer may be connected to a cooler C as schematically depicted in Fig. 1.

A spring carrier 30 is arranged between the first and second battery cell 14, 16, and more particularly the spring carrier 30 is arranged between the first and second thermal fins 18, 24. Even more particularly, the spring carrier 30 is arranged between the first and second barrier layers 22, 28 to form a swelling compensator to prevent variation in dimension of the battery cells 14, 16.

As depicted in Fig. 2, the spring carrier 30 comprises a guide 32 and a spring plate 34 (also called spring seat). The guide 32 has is for instance made of metal. The guide 32 may have an annular shape. However, other shapes of the guide 32 are also possible. The spring plate 34 is for instance made of metal, and in particular is made of spring steel. The spring plate 34 is for instance annular. The spring plate 34 may comprise an outer edge 36 and an inner edge 38. The inner edge 38 defines for instance a cavity 40. The inner edge 38 is for instance connected to the guide 32. For instance, the spring plate 34 is stuck on the guide 32. The spring plate 34 may move a with regard to the guide 32 along the direction of a guide axis. The guide axis corresponds for instance to the median axis of the guide 32. In another embodiment, the spring plate 34 may be fixed (for instance glued, welded, ...) to the guide 32. The cavity 40 may receive at least in part the guide. The outer edge 36 is a free edge. In other embodiment, other shapes of the spring plate 34 are possible.

As visible in Fig. 2, the guide 32 is fixed to a supporting plate 42. The spring plate 34, connected to and guided by the guide 32 rests against a first holding plate 44. More particularly, the outer edge 36 of the spring plate 34 rests against the first holding plate 44. The first holding plate 44 is arranged for instance adjacent to the first barrier layer 22 and the spring plate 34 is in direct contact with the first holding plate 44. In another embodiment, the spring plate 34 may be in direct contact with the first barrier layer 22 if said first barrier layer 22 is robust enough to support the forces applied by the spring plate 34. The presence of the holding plate 44 allows notably to protect the barrier layer 34, to support the load applied by the spring carrier 30 due to the battery swelling and to uniformly distribute the load in the lateral plan.

More particularly, as depicted in Fig. 2, the spring carrier 30 comprises two guides 32, 32' and two spring plates 34, 34'. The two guides 32, 32' and spring plates 34, 34' are located opposite each other, such that the first guide 32 and the first spring plate 34 is directed toward the first battery cell 14 and the second guide 32' and the second spring plate 34' is directed toward the second battery cell 16. The supporting plate 42 extends between the first and second guide 32, 32', and first and second guide 32, 32' are fixed to the supporting plate 42. For instance, as visible in Fig. 2, the first and second guides 32, 32' are opposite each other (in other words they are aligned). However, in other embodiments, first and second guides 32, 32' may be offset, such that first and second guides 32, 32' are not aligned. The second guide 32' is similar or identical to the first guide 32. The second spring plate 34' is similar or identical to the first spring plate 34. A second holding plate 46 extends between the second spring plate 34' and the second barrier layer 28. The presence of the second holding plate 46 allows notably to protect the second barrier layer 28, to support the load applied by the spring carrier due to the battery swelling and to uniformly distribute the load in the lateral plan.

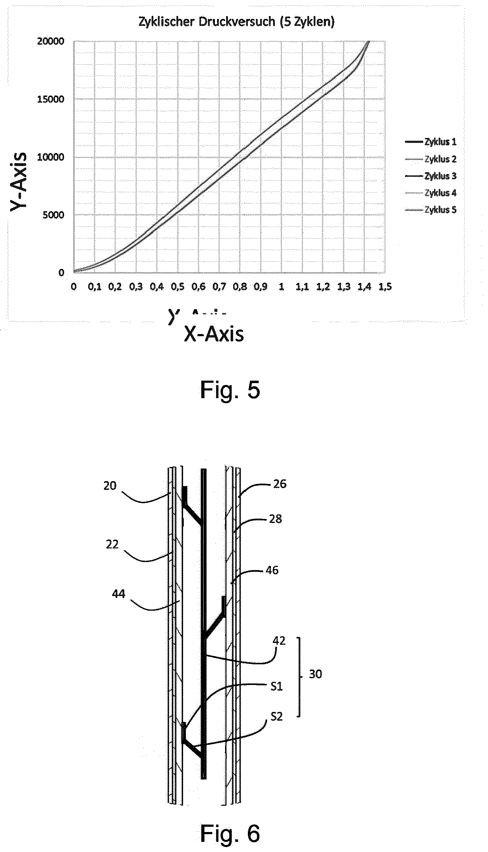

In another embodiment, shown for instance in Fig. 6, the spring carrier 30 may comprises the supporting plate 42 and a plurality of segments extending from the supporting plate and in contact with the holding plate for instance to form a swelling compensator. The spring carrier 30 comprises for instance a first segment S1 destined to contact the thermal fin or the holding plate and a second segment S2 extending between the first segment and the supporting plate 42. The first segment S1 extends parallel to the holding plate, whereas the second segment extends with a non-zero angle from the first segment and from the supporting plate 42. More particularly the second segment extends with a 45 degrees angle from the supporting plate. The arrangement of the second segment S2 and the material of the spring carrier (spring steel for instance) allows the elasticity of the structure. The first and second segment are arranged on both sides of the supporting plate 42. The number of second and first segments depends on the needed elasticity for compensating the swelling. In other embodiments (not shown), a curved elastic tongue may extend from the supporting plate 42 to contact the holding plate.

The first and/or second holding plate 44, 46 may be in metal or plastic material. More particularly, the first and/or second holding plate 44, 46 are made with a material with a high stiffness or hardness. This is required to avoid any damage which could occurs to the thermal fin 18 by the spring carrier 30.

The battery sub-assembly 12 with the first cell 14, the second cell 16, the first thermal fin 18, the second thermal fin 24 and eventually the supporting plate 42 and the first and second holding plates 44, 46 may comprise a plurality of spring carriers 30 as described above. The spring carriers 30 may all have the same dimensions or eventually may have different dimensions. The spring carriers 30 are distributed in the lateral plan of the battery cells. The number and position of the spring carrier 30 depends on the increase in volume of the battery cells and the compensation needed in the battery casing as well as on the material used for the different interface (supporting plate, barrier layer, holding plate and contact layer). More particularly, the positioning of the spring carriers 30 between the battery cells 14, 16 is important for the optimum absorption of the inhomogeneous load distribution of the battery cells.

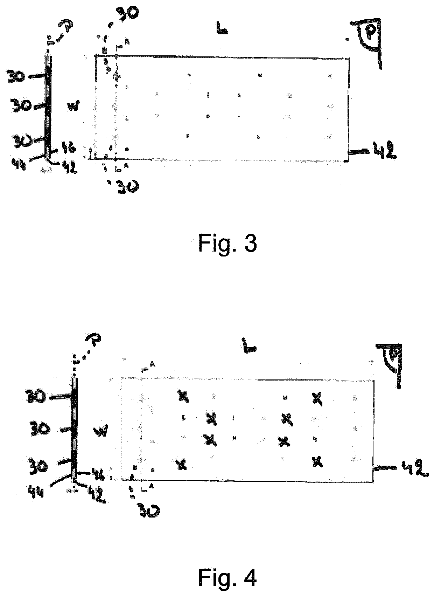

Fig. 3 shows a possible positioning of spring carriers 30 distributed over the entire lateral surface/plan P between the two battery cells 14, 16. As visible in Fig. 3 the spring carriers 30 are regularly distributed according to a specific arrangement. More particularly the spring carriers 30 are arranged symmetrically with respect to a median plane. For instance they are disposed in rows. In a first row, in the vicinity of a short edges three first spring carriers (A, B, C) are disposed. In a second row, adjacent to the first row and at a non-zero distance from the three first spring carriers, two further spring carriers (D, E) are disposed sensibly centred in the middle of the plane. In a third row, two further spring carriers (F, G) are disposed at a greater distance from each other than the two former spring carriers. The arrangement of the first row is like the arrangement of the second row. The arrangement of the fifth row is similar to the arrangement of the fourth row. The arrangement of the sixth row is like the arrangement of the second row. And finally, the arrangement of the seventh row is similar than the arrangement of the first row. The distribution of the spring carriers 30 allows to control the rigidity of the system. Notably to control the compression path relative to the load applied. For instance, with the arrangement depicted in Fig. 3, 12.2 Kilonewton are necessary for a compression of 1mm.

In order to increase the stiffness/rigidity and avoid a system not being stiff enough, spring carriers 30 may be added, as visible in Fig. 4. The bolt crosses represent the added spring carriers with regard to the arrangement of Fig. 3. As visible, the arrangement of Fig. 4 comprises eight rows. The first and last rows still comprise three spring carriers, the fourth row (corresponding to the median row) comprises two spring carriers, and all the other rows comprise each four spring carriers. The rows are regularly distributed. However, in another embodiment, the distance between two rows may vary. For instance, with the arrangement depicted in Fig. 4, the supporting plate 42 has a length L of 250mm, a width w of 100mm, and a compression of about 1 mm can occur with a last of 20 Kilonewtons.

Thus, the compression can easily be adapted in the battery sub-assembly to the forecasted loads applied by the cell.

Fig. 5 shows a force-displacement curve for five compression cycles. The cycles are realized one after the other. This chart shows the repeatability of the force-displacement curve over several cycles. It corresponds to a simulation of multiple (for instance five) charging and discharging cycles of the battery. During charging of the cells, swelling appears on the lateral walls of the cells. The swelling subjects the sub-unit arranged between the cells to a load increase. The sub-unit between a first and a second cell is, as described above, a first and second contact layer, a first and second barrier layer, eventually a supporting unit and a first and second holding plate, as well as the spring carriers. The load applied to this sub-unit during charging can be up to 20 kN (kilonewtons). During the discharge, the swelling decreases as well as the applied load.

On the chart, the X-axis corresponds to the compression path, wherein the Y-axis corresponds to the load force applied to a sub-assembly for testing its rigidity and stiffness. Each cycle corresponds to one charging cycle of the battery cells. As visible, even after four cycles, the force-displacement curve is the same or sensibly similar to the force-displacement curve recorded during the first loading cycle (corresponding to a charging cycle).

The present invention resolves the problem of the swelling of prismatic (or cylindrical or pouch) battery cells when they are stacked or assembled side by side and allows to maintain the thermal isolation between cells. Compression of electrodes, necessary for preserving the strength of the active material of the battery cells is ensured, however. Thus, the battery formed by a plurality of battery sub-assembly presents a constant length over time. No dilatation occurs within the battery casing.
battery module 10
battery sub-assemblies 12
first and a second battery cell 14, 16
first thermal fin 18
first contact layer 20
first barrier layer 22
second thermal fin 24
second contact layer 26
second barrier layer 28
spring carrier 30
guide 32, 32'
spring plate 34, 34'
outer edge 36
inner edge 38
cavity 40
supporting plate 42
first holding plate 44
second holding plate 46
cooler C

## Claims

1. Battery sub-assembly (12) comprising:
- a first and a second battery cell (14, 16), in particular battery cell of prismatic format;
- a first contact layer (20) adapted to contact the first battery cell (14);
- a first barrier layer (22) adjacent to the first contact layer (20), wherein the thermal conductivity of the first contact layer (20) is greater than the thermal conductivity of the first barrier layer (22);
- a second contact layer (26) adapted to contact the second battery cell (16);
- a second barrier layer (28) adjacent to the second contact layer (26), wherein the thermal conductivity of the second contact layer is greater than the thermal conductivity of the second barrier layer, and
- a spring carrier (30) arranged between the first and the second barrier layer (22, 28), the spring carrier (30) forming a swelling compensator.

2. Battery sub-assembly (12) according to claim 1, wherein the spring carrier (30) comprises a guide (32, 32') and a spring plate (34, 34'), wherein the spring plate is connected to and guided by the guide.

3. Battery sub-assembly (12) according to claim 2, wherein the guide (32) is a first guide, the spring plate (34) is a first spring plate, and the spring carrier further comprises a second guide (32') and a second spring plate (34'), the second spring plate (34') being connected to the second guide (32').

4. Battery sub-assembly (12) according to claim 3, wherein a supporting plate (42) extends between the first and the second guide (32, 32').

5. Battery sub-assembly (12) according to any of claims 1 to 4, wherein a first holding plate (44) is arranged between the first barrier layer (22) and the spring carrier (30) such that the spring carrier contacts the first holding plate.

6. Battery sub-assembly (12) according to claim 5, wherein a second holding plate (46) is arranged between the second barrier layer (28) and the spring carrier (30) such that the spring carrier contacts the second holding plate.

7. Battery sub-assembly (12) according to any of claims 1 to 6, wherein the first and/or second contact layer (20, 26) is made of copper.

8. Battery sub-assembly (12) according to any of claims 1 to 7, wherein the first and/or second barrier layer (22, 28) is made of paper.

9. Battery sub-assembly (12) according to any of the preceding claims, wherein a plurality of spring carriers (30) is arranged along the first and second barrier layers between the first and second battery cells.

10. Battery sub-assembly (12) according to any of the preceding claims, wherein the spring carrier (30) has a thickness between 2 and 6 mm in a rest position and a thickness between 1 mm and 3 mm mm when under constraint.

11. Battery sub-assembly (12) according to any of the preceding claims, wherein the spring carrier (30) is in metal.

12. Battery module (10) comprising a plurality of battery sub-assemblies (12) according to any of the preceding claims and being such that between two battery cells (14, 16) at least one spring carrier is arranged.
